# EUROPEAN PATENT SPECIFICATION

(11) **EP 0 852 085 B1**
(45) Date of publication and mention of the grant of the patent: **29.12.1999**
(21) Application number: 96930293.4
(22) Date of filing: 18.09.1996
(51) Int. Cl.: H04B 7/26, H04Q 7/36

(54) **CELLULAR COMMUNICATIONS SYSTEM**
ZELLULARES ÜBERTRAGUNGSSYSTEM
SYSTEME DE TELECOMMUNICATION CELLULAIRE

(30) Priority: 19.09.1995 GB 9519116
(43) Date of publication of application: 08.07.1998
(73) Proprietor: NORTEL NETWORKS CORPORATION, Montreal, Quebec H2Y 3Y4 (CA)
(72) Inventor: OVERBURY, Francis, Giles, Essex CM6 1BY (GB)
(74) Representative: Ryan, John Peter William
(86) International application number: GB9602287
(87) International publication number: WO9711537

(56) References cited:
- EP-A- 0 201 254
- US-A- 4 759 051

## Description

This invention relates to cellular communications systems.

### BACKGROUND OF THE INVENTION

Cellular communications systems must provide a high percentage of coverage so that subscribers can reliably make and receive calls wherever they may be located within the service area, and whether they are stationary or moving.

Conventional cellular systems divide an area into cells, each cell being served by a base station. A base station may be centrally sited or offset within a cell with antennas positioned as high as possible to offer maximum coverage. Undulating terrain, foliage and buildings cause shadowing and fading of signals, to create areas where reception is difficult. These effects increase at higher frequencies and are particularly severe at the higher frequencies (low GHz) which are now being considered for future communications systems.

It may be possible to improve coverage of the poorly served or shadowed areas within the coverage area by an increase in transmit power at the base station. However, this causes a further problem of increased interference into adjacent cells where the same frequencies are re-used.

An alternative solution to improve coverage is to create new cells to serve each of the shadowed areas. These new cells, often called microcells, comprise a low-power base station advantageously sited to serve the shadowed area. This requires additional equipment, a further connection from the new base station to the network by cable or a dedicated microwave link, and the allocation of a further band of channels for the microcell. This incurs considerable expense. There is also a need to hand-over mobiles as they roam between cells, which increases signalling within the network.

There have been a number of suggestions to use repeaters or relays to serve regions of poor coverage. European Patent Application EP-0 637 145-A1 uses single radio repeaters to serve shadowed regions within the service area of a base station. The repeaters are advantageously sited to receive downlink signals from the base station, amplify them, and re-transmit them at a new frequency according to a frequency transposition algorithm. Uplink signals transmitted from a mobile are similarly received and transposed in frequency by the repeater for onward transmission to the base station. Each repeater uses a different transposition algorithm, and frequencies are carefully chosen so as not to interfere with adjacent repeaters or base stations. Hand-over of a mobile between the service areas of a repeater and base station occurs in the conventional manner.

European Patent Application EP-0 605 182-A2 also enhances coverage of a base station by using repeaters. The repeaters amplify signals received from a base station before re-transmission into a shadowed region. No frequency translation takes place, with just the physical isolation of the shadowed region from the base station together with a gain control to prevent oscillations. Oscillations occur where an amplified signal from a transmitter is detected by a receiver input, a form of positive feedback.

European Patent Application EP-0 415 810-A1 discloses a radiotelephone transmission network having a base station serving mobiles either directly, or via a number of repeater stations. The repeaters perform a frequency transposition.

United Kingdom Patent Application GB-2,203,018-A discloses a radiotelephone system which has a base station and a number of transponders to serve subscribers, the base station and transponders together forming a radio zone. Transponders are illuminated by fixed directional antennas at the base station, one per transponder, and relay signals without a translation in frequency. To adapt to changing traffic conditions the number of channels assigned to a radio zone is altered. Additionally, the size and shape of radio zones may be altered by chaining several transponders together.

The present invention seeks to provide an improved cellular communications system.

### SUMMARY OF THE INVENTION

According to an aspect of the present invention there is provided a cellular communications system comprising:
- a base station having an antenna arrangement capable of forming directional beams;
- a plurality of relays disposed within range of the base station, each of the relays having means for receiving signals from the base station and means for radiating the received signals to subscribers within a respective service area of the relay,
wherein the base station in use can vary the width of its directional beams whereby to selectively illuminate the relays.

This system has the advantage of adapting to changes in traffic requirements, and other circumstances which may affect the system.

Preferably the antenna arrangement can vary the number of beams which it forms.

Preferably the antenna arrangement can vary the direction of beams which it forms.

Advantageously the antenna arrangement can form a beam which selectively illuminates a single relay at a particular distribution frequency, to increase capacity in that relay's service area.

Advantageously the relays are disposed such that the service area of one relay overlaps that of a neighbouring relay, and wherein the antenna arrangement can form a beam which selectively illuminates a group of relays at a common distribution frequency to provide a simulcast region.

The antenna arrangement can comprise an adaptive array of antenna elements fed by a beam forming network. To provide coverage in azimuth around the base station one or more linear arrays can be used, or a circular array of antenna elements can be used. Using adaptive arrays helps to minimise the amount of equipment at the base station as a single array can form a plurality of individually controllable beams.

Preferably the relays have translation means for translating the received signals to a different frequency. This minimises problems with feedback between the transmit and receive paths of a relay. Advantageously the base station illuminates relays at distribution frequencies lying outside of a subscriber terminal's operating band, the translation means translating the received signals to a frequency lying within a subscriber terminal operating band. The distribution frequency can be a millimetric frequency. Using millimetric frequencies allows small antennas to be used which form narrow beamwidths. There is also more capacity in this part of the radio spectrum.

Advantageously the base station also has a means to communicate directly with subscribers at subscriber frequencies. This allows the base station to act as an umbrella for a cell.

According to another aspect of the present invention there is provided a method of operating a cellular communications system comprising a base station having an antenna arrangement and a plurality of relays disposed within range of the base station,
the method comprising:
- forming directional beams at the antenna arrangement,
- receiving signals from the base station, at each of the relays, and radiating the received signals to subscribers within a respective service area of the relays,
wherein the base station in use varies the width of its directional beams and thereby selectively illuminates the relays.

### BRIEF DESCRIPTION OF THE DRAWINGS

Embodiments of the invention will now be described with reference to the accompanying drawings, in which:
Figure 1 shows a cellular system according to an embodiment of the invention;
Figure 2 shows one arrangement for distributing signals to relays in the system of figure 1;
Figure 3 shows a base station antenna arrangement using linear arrays of antenna elements;
Figure 4 shows a base station antenna arrangement using a circular array of antenna elements;
Figure 5 is a block diagram of one of the repeaters shown in figures 1 and 2 which performs frequency translation.

### DESCRIPTION OF THE PREFERRED EMBODIMENTS

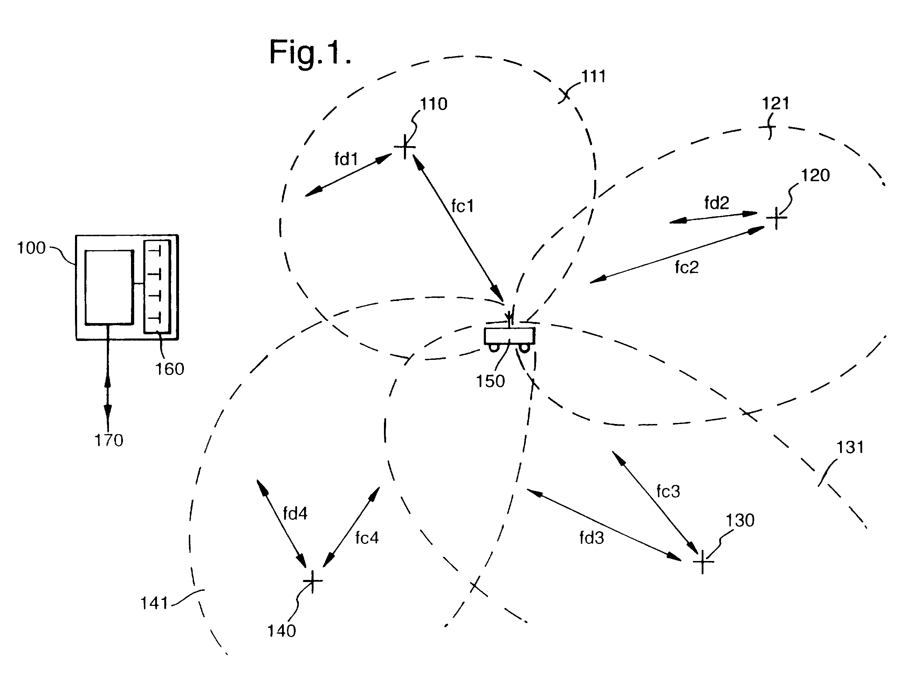

Figure 1 shows a cellular communications system according to an embodiment of the invention. Base station 100 is associated with a plurality of relay units 110, 120, 130, 140. Base station 100 has an antenna array 160 for transmitting and receiving signals from the relays. The base station defines a primary service area, acting as an umbrella for the plurality of relays within that area. Each relay receives signals from base station 100 at a distribution frequency f_{d1}, f_{d2}, f_{d3}, f_{d4}, translates the received signals to a different frequency and re-transmits them at this new frequency, f_{c1}, f_{c2}, f_{c3}, f_{c4}. Typically distribution frequencies f_{d1}, f_{d2}, f_{d3}, f_{d4} lie outside of a subscriber terminal's operating band, whereas the translated frequencies f_{c1}, f_{c2}, f_{c3}, f_{c4} lie within a subscriber terminal's operating band. An uplink path from subscriber 150 to base station is also supported by the relays. It is to be understood that use of the term frequency f_{c1}, f_{c2...} represents one or a block of frequencies, to support communications with a number of subscribers. Each of the frequencies in the block may be time-shared by a plurality of subscribers, or pairs of frequencies may be allocated to support two-way communications. Frequency, time or code division multiplexing techniques can be used to support communications with a number of subscribers.

Each relay radiates signals to define a service area 111, 121, 131, 141 to serve subscribers 150. The service area of one relay overlaps that of neighbouring relays to permit a smooth transition as a mobile roams between relay service areas. Relays may be used throughout the primary service area of the base station, to form a complete 'honeycomb' structure. Alternatively relays may be used in groups over a limited part of the primary service area where coverage is particularly poor.

Antenna array 160 forms directional beams to illuminate individual relays or groups of relays. Base station 100 is linked to a higher-order part of the communications network such as a base station controller by link 170, which may be a cable or microwave link. A complete system will comprise a number of base stations and relays of the type just described.

One reason for deploying relays is to provide a higher percentage of coverage. By distributing relays across an area, rather than relying on transmissions from a single base station, a more even distribution of signal power is possible. One benefit is an increased signal to noise ratio (SNR) at a subscriber's receiver. A further benefit is reduced interference into adjacent cells, which increases carrier to interference ratio (CIR) at a subscriber's receiver. Each relay radiates at a much reduced power level compared with the situation where a single base station is used to serve the same area. The reduction in power can be several orders of magnitude.

Advantageously the base station illuminates a group of relays at a common distribution frequency. This distribution frequency is outside a subscriber terminal's operating band. Each relay receives this distribution frequency, amplifies and translates by a fixed offset frequency (which is the same for each relay) and re-transmits at a frequency within a subscriber terminal's operating band, which is the same for each relay i.e. f_{c1}=f_{c2}=f_{c3}=f_{c4}. The distribution frequency may lie within the millimetric band e.g. 10GHz or more. Base station 100 itself may also radiate signals within a subscriber terminal's operating band to supplement coverage provided by the relays.

With a number of relays transmitting at the same frequency, it is likely that a subscriber will receive signals simultaneously from more than one station. This provides a diversity gain, because a subscriber should be able to receive from at least one source, even if another is obscured. However, it is necessary to prevent destructive interference which occurs where the phase and amplitude relationship of signals of the same frequency is such that they cancel each other out, or cause a deep fade in the signal level.

On the down-link to subscribers destructive interference is prevented by decorrelating the signals which each relay transmits. This is achieved by coding of the signals. The coding may be an overlaid spread-spectrum code added to the communications signals. A suitably equipped subscriber terminal can optimally re-combine the signals. A RAKE device can achieve this. Alternatively the coding may be a distinctive delay, each relay transmitting the same signal after a delay which is different from that used by other relays. An equaliser at the subscriber's terminal optimally combines the differing signals. Preferably the coding is applied at the base station before transmission to the relays to minimise equipment needed at the relays. This further minimises cost of the relays.

On the up-link, destructive interference is prevented by deploying two or more diversity antennas at the base station. The up-link signals received by these antennas are optimally combined.

Deploying relays in this manner allows a high percentage of coverage.

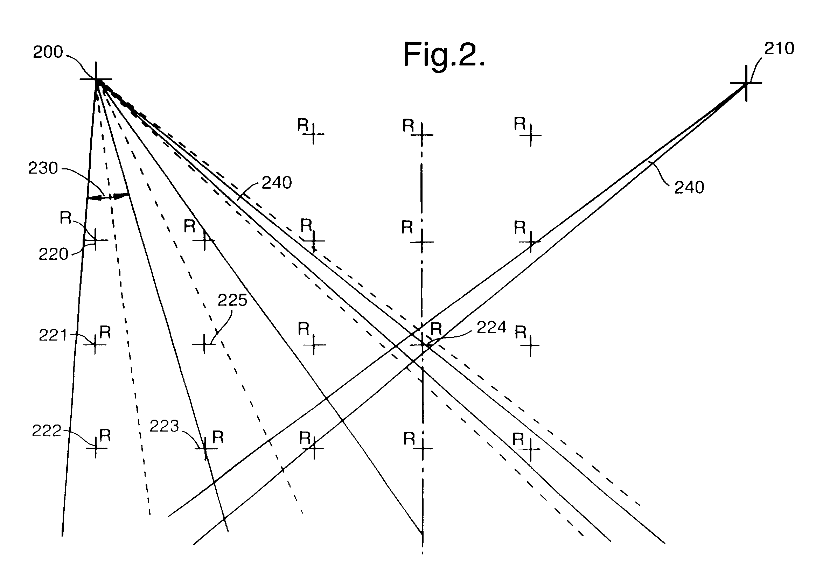

Referring to Fig. 2, an arrangement for illuminating relays is shown. Relays R are distributed across a coverage area. Two base stations 200, 210 are shown.

Base stations 200, 210 generate a plurality of directional beams. Each of the beams is independently controlled in beamwidth and direction to illuminate a group of one or more selected relays. One or more channels are allocated to each beam, depending on the capacity which is required in the area served by the relays illuminated by that beam.

Where a group of relays are required to transmit the same signals, a relatively broad (e.g. 20°) beam is formed by the base station antenna array. Beam 230 is shown illuminating relays 220, 221, 222, 223, each of which receives at the distribution frequency, translates by a fixed frequency offset and re-transmits at the translated frequency. Signals transmitted from mobiles to the relays on the up-link path are similarly translated at the relay for transmission to the base station.

Where a smaller group of relays, or an individual relay is required to transmit a particular signal, a narrow, pencil beam is formed by the base station antenna array. Beam 240 is shown illuminating single relay 224. Pencil beams may have a beamwidth of 3", which are practical at millimetric frequencies above 10GHz. Additional capacity is offered in the service area of relay 224 by illuminating this single relay at a distribution frequency which is different from those used in neighbouring beams. The ability to selectively illuminate relays allows relays to operate on different frequencies as required. This allows a network manager to accommodate increased traffic in particular areas and prevent call blocking. The change in traffic in a particular area could be monitored in a number of ways, such as monitoring the proportion of channels which are in use in the area served by a particular beam. A further advantage of illuminating selected relays is that it minimises interference into adjacent cells where the same frequencies are re-used.

Increased traffic could be long-term, such as a gradual increase caused by development of an area, or short-term such as the occasional increased demand generated at a busy stadium during a major event. Varying capacity by selective illumination of relays is considerably simpler than the conventional method of reconfiguring a set of base stations by sending control data to each base station.

Other events may also require variation in the radiation pattern of the base station's directional beams. These could include interference with neighbouring cells and propagation conditions.

Relays can be distributed across an area such that no more than a single relay lies along a line drawn from a base station. This ensures that when a narrow beam is generated by a base station, it illuminates just a single relay.

The ability of the base station to form directional beams of variable beamwidth may be achieved by a plurality of antennas, each fixed to a particular beamwidth e.g. 3°, 10°, 20°, and switching between these antennas as required. However, a preferred option is to use one or more adaptive arrays of antenna elements, which can form a plurality of beams, each beam being independently controllable in direction (azimuth and elevation), beamwidth, carrier frequency or a combination of these as required. Typically the uplink and downlink antenna patterns are similarly shaped.

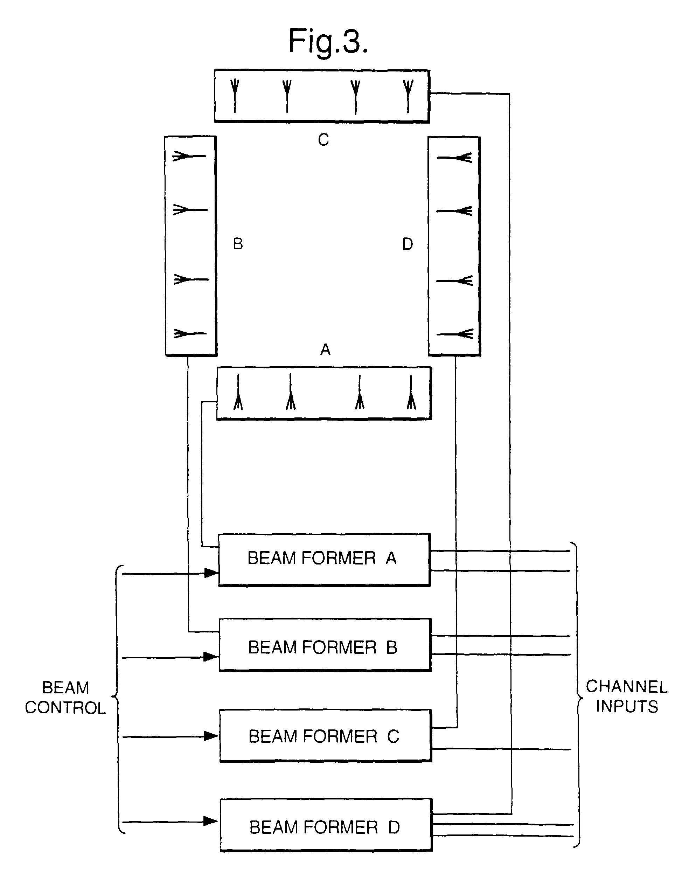

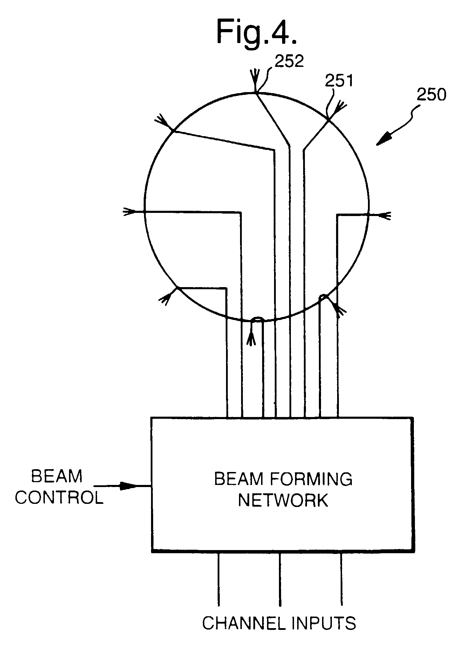

Figures 3 and 4 show two alternative ways of providing coverage over a full 360° in azimuth surrounding the base station using adaptive arrays. The arrangement shown in figure 3 uses four linear arrays of antenna elements A,B,C,D disposed in a rectilinear fashion. Each linear array comprises a plurality of antenna elements. The number of elements in the array determines the minimum beamwidth which is possible. The elements in each array are fed by a beam forming network. Each beam forming network receives input signals and splits each input signal into a set of feeds for the elements in the array, the network applying an individual phase shift and amplitude weighting to each feed such that the totality of emissions from the elements in the array creates a beam having a particular beamwidth and direction relative to the array. More than one beam can be created from each linear array. Each beamformer receives a control signal which determines the width, direction and number of beams that are generated. The control signal also determines the number of channels allocated to each beam. It is also possible to form a beam which varies in elevation. Other numbers of linear arrays can be used in the base station antenna arrangement, for example three or six arrays.

Figure 4 shows an alternative form of array which can be used instead of a set of linear arrays. A circular array 250 comprises a set of antenna elements disposed in a circle. For clarity just eight elements are shown in this representation, but typically the number of elements in the array would exceed sixteen. The number of antenna elements in the array and the diameter of the array determine the beamwidth which is generated. A full range of beamwidths from narrow to omni-directional coverage is possible. As with a linear array, a beam forming network receives input signals and splits each input signal into a set of feeds which are individually weighted in phase and amplitude so as to create a beam of a desired beamwidth and direction relative to the array. A beam control signal determines the width, direction and number of beams that are generated. One of the properties of a linear array is that it tends to generate broader beams as the beams are directed at a more acute angle to the array. The circular array allows beams to be generated at any azimuth angle at a constant beamwidth.

The arrays are capable of generating a set of beams, each beam having a different beamwidth, direction and carrier frequency.

Signals received by a relay are re-transmitted with the same relative amplitudes which exist at the relay receive antenna. It is possible to illuminate a relay by more than one base station. For example, relay 224 could be provided with directional antennas aligned with base stations 200 and 210. This results in the relay emitting a mix of the two received signals at the same relative field strengths as existed at the relay input.

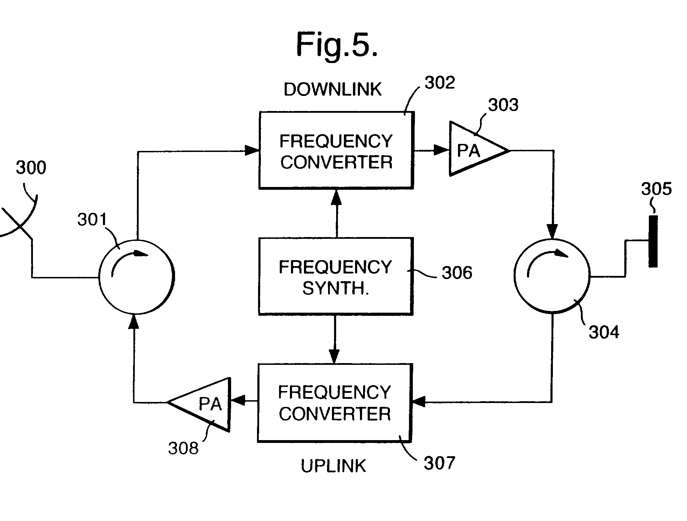

Figure 5 shows a block diagram of one of the relay units shown in figures 1 and 2. Firstly the downlink processing is considered. A directional antenna 300 receives signals from a base station. The received signals are at a distribution frequency, typically in the millimetric band, of around 10 - 20GHz. Received signals are fed to a circulator which conveys them to a frequency converter 302. This performs the frequency translation step, translating received signals to the region of 1-3GHz for subsequent retransmission. Frequency translation is typically via an intermediate frequency (IF) of 1GHz, and uses signals generated by frequency synthesiser 306. Power amplifier 303 boosts the translated signals to an appropriate power level before they are fed, via a further circulator 304, to an output antenna 305 for distribution to subscribers within the region of the relay. Output antenna 305 typically has an omnidirectional characteristic. Frequency translation between other frequency bands is possible.

The uplink processing is the inverse of the process just described. Signals are received from subscribers by antenna 305. The received signals pass via circulator 304 to a frequency converter 307. This converts the received signals to a suitable frequency for re-transmission towards the base station, typically a millimetric frequency. Frequency converter 307 uses signals generated by frequency synthesiser 306 and typically performs the translation via an IF. Converted signals are amplified 308 before passing via circulator 301 to antenna 300. Antenna 300 provides a directional, high-gain link back to the serving base station.

In some situations it may be necessary to site antenna 300 some distance from antenna 305, e.g. where a relay is providing coverage of a street bounded by high buildings which is shadowed from the base station. Antenna 300 may be sited in a position where there is a clear line-of-sight path to the base station, such as a building roof-top, and antenna 305 sited some distance down the side of the same building. In these cases the processing electronics could be sited alongside one of the antennas, with a cable coupling to the other antenna. In these situations frequency translation may not be needed because the transmit and receive paths are sufficiently isolated from one another.

Power for the processing electronics may be provided by the mains electricity supply, tapped locally, or from a battery arrangement fed by a solar cell array. Studies have shown that a solar cell option is feasible at a reasonable cost.

Relays of this type are particularly suitable for rapid deployment. They offer advantages in developing countries where the copper or optical fibre cable networks which could be used to join remote base stations are unavailable. Simple relays of this type could be mass-produced at low cost and permit wide deployment at short spacings, allowing a high percentage of coverage at relatively low levels of radiated power. Percentage coverage of around 99% should be possible.

## Claims

1. A cellular communications system comprising:
- a base station having an antenna arrangement capable of forming directional beams;
- a plurality of relays disposed within range of the base station, each of the relays having means for receiving signals from the base station and means for radiating the received signals to subscribers within a respective service area of the relay,
wherein the base station in use can vary the width of its directional beams whereby to selectively illuminate the relays.

2. A system according to claim 1 wherein the relays are disposed such that the service area of one relay overlaps that of a neighbouring relay.

3. A system according to any preceding claim wherein the antenna arrangement can vary the number of beams which it forms.

4. A system according to any preceding claim wherein the antenna arrangement can vary the direction of beams which it forms.

5. A system according to any preceding claim wherein the antenna arrangement can form a beam which selectively illuminates a single relay at a particular distribution frequency, to increase capacity in that relay's service area.

6. A system according to any one of claims 1 to 5 wherein the antenna arrangement can form a beam which selectively illuminates a group of relays at a common distribution frequency to provide a simulcast region.

7. A system according to any preceding claim wherein the antenna arrangement comprises an adaptive array of antenna elements fed by a beam forming network.

8. A system according to claim 7 wherein the adaptive array comprises a circular array of antenna elements.

9. A system according to any preceding claim wherein the relays have translation means for translating the received signals to a different frequency.

10. A system according to claim 9 wherein the base station illuminates relays at distribution frequencies lying outside of a subscriber terminal's operating band, the translation means translating the received signals to a frequency lying within a subscriber terminal's operating band.

11. A system according to any preceding claim wherein the base station also has a means to communicate directly with subscribers at subscriber frequencies.

12. A base station for use in a cellular communications system according to any preceding claim, the base station having an antenna arrangement capable of forming directional beams whereby to serve a plurality of relays disposed within range of the base station and wherein the base station in use can vary the width of its directional beams whereby to selectively illuminate the relays.

13. A method of operating a cellular communications system comprising a base station having an antenna arrangement and a plurality of relays disposed within range of the base station,
the method comprising:
- forming directional beams at the antenna arrangement,
- receiving signals from the base station, at each of the relays, and radiating the received signals to subscribers within a respective service area of the relays,
wherein the base station in use varies the width of its directional beams and thereby selectively illuminates the relays.

## Patentansprüche

1. Zellulares Übertragungssystem mit:
einer Basisstation mit einer Antennenanordnung, die gerichtete Strahlen erzeugen kann,
einer Vielzahl von innerhalb eines Bereichs der Basisstation angeordneten Relais, wobei jedes der Relais eine Einrichtung zum Empfang von Signalen von der Basisstation und eine Einrichtung zur Abstrahlung der empfangenen Signale an Teilnehmer innerhalb eines jeweiligen Versorgungsbereichs des Relais besitzt,
wobei die Basisstation in Verwendung die Breite seiner gerichteten Strahlen verändern kann, wodurch die Relais ausgewählt bestrahlt werden.

2. System nach Anspruch 1, wobei
die Relais derart angeordnet sind, daß der Versorgungsbereich eines Relais den eines benachbarten Relais überlappt.

3. System nach einem der vorhergehenden Ansprüche, wobei
die Antennenanordnung die Anzahl von Strahlen verändern kann, die sie erzeugt.

4. System nach einem der vorhergehenden Ansprüche, wobei
die Antennenanordnung die Richtung der Strahlen verändern kann, die sie erzeugt.

5. System nach einem der vorhergehenden Ansprüche, wobei
die Antennenanordnung einen Strahl erzeugen kann, der ausgewählt ein einzelnes Relais bei einer bestimmten Verteilfrequenz bestrahlt, um eine Kapazität in dem Versorgungsbereich dieses Relais zu erhöhen.

6. System nach einem der Ansprüche 1 bis 5, wobei
die Antennenanordnung einen Strahl erzeugen kann, der ausgewählt eine Gruppe von Relais bei einer gemeinsamen Verteilfrequenz bestrahlt, um einen Simultansendungsbereich auszubilden.

7. System nach einem der vorhergehenden Ansprüche, wobei
die Antennenanordnung ein adaptives Feld von Antennenelementen umfaßt, die durch ein Strahlerzeugungsnetzwerk gespeist werden.

8. System nach Anspruch 7, wobei
das adaptive Feld ein kreisförmiges Feld von Antennenelementen umfaßt.

9. System nach einem der vorhergehenden Ansprüche, wobei
die Relais eine Verschiebungseinrichtung zur Verschiebung der empfangenen Signale auf eine verschiedene Frequenz besitzen.

10. System nach Anspruch 9, wobei
die Basisstation Relais bei Verteilfrequenzen bestrahlt, die außerhalb einer Funktionsbands einer Teilnehmerstation liegen, wobei die Verschiebungseinrichtung die empfangenen Signale auf eine Frequenz verschiebt, die innerhalb eines Funktionsbands einer Teilnehmerstation liegt.

11. System nach einem der vorhergehenden Ansprüche, wobei
die Basisstation auch eine Einrichtung zur direkten Übertragung zu Teilnehmern bei Teilnehmerfrequenzen besitzt.

12. Basisstation zur Verwendung in einem zellularen Übertragungssystem nach einem der vorhergehenden Ansprüche, wobei die Basissstation
eine Antennenanordnung besitzt, die gerichtete Strahlen erzeugen kann, wodurch eine Vielzahl von innerhalb eines Bereichs der Basisstation angeordnete Relais versorgt wird, und
die Basisstation in Verwendung die Breite ihrer gerichteten Strahlen verändern kann, wodurch die Relais ausgewählt bestrahlt werden.

13. Verfahren zum Betreiben eines zellularen Übertragungssystems mit einer Basisstation mit einer Antennenanordnung und einer Vielzahl von innerhalb eines Bereichs der Basisstation angeordneten Relais, mit:
Erzeugen von gerichteten Strahlen in der Antennenanordnung,
Empfangen von Signalen von der Basisstation an jedem der Relais und Abstrahlen der empfangenen Signale an Teilnehmer innerhalb eines jeweiligen Versorgungsbereichs der Relais,
wobei die Basisstation in Verwendung die Breite ihrer gerichteten Strahlen verändert und dadurch die Relais ausgewählt bestrahlt.

## Revendications

1. Système de communications cellulaires, comprenant :
une station de base possédant un ensemble d'antennes capable de former des faisceaux directionnels, et
plusieurs relais disposés dans la portée de la station de base, chacun des relais possédant un dispositif destiné à recevoir depuis la station de base et un dispositif destiné à émettre des signaux reçus vers des abonnés dans une zone respective de service du relais,
dans lequel la station de base, pendant l'utilisation, peut faire varier la largeur de ses faisceaux directionnels afin qu'elle éclaire sélectivement les relais.

2. Système selon la revendication 1 dans lequel les relais sont disposés afin que la zone de service d'un relais recoupe celle d'un relais voisin.

3. Système selon l'une quelconque des revendications précédentes, dans lequel l'ensemble d'antennes peut faire varier le nombre de faisceaux qu'il forme.

4. Système selon l'une quelconque des revendications précédentes, dans lequel l'ensemble d'antennes peut faire varier la direction des faisceaux qu'il forme.

5. Système selon l'une quelconque des revendications précédentes, dans lequel l'ensemble d'antennes peut former un faisceau qui éclaire sélectivement un relais unique à une fréquence particulière de distribution afin que la capacité de la zone de service de ce relais soit accrue.

6. Système selon l'une des revendications 1 à 5, dans lequel l'ensemble d'antennes peut former un faisceau qui éclaire sélectivement un groupe de relais à une fréquence commune de distribution pour créer une région de couverture simultanée.

7. Système selon l'une quelconque des revendications précédentes, dans lequel l'ensemble d'antennes comprend un aérien à adaptation d'éléments d'antenne alimenté par un réseau formateur de faisceaux.

8. Système selon la revendication 7, dans lequel l'aérien à adaptation comprend un aérien circulaire d'éléments d'antenne.

9. Système selon l'une quelconque des revendications précédentes, dans lequel les relais comportent un dispositif de transformation des signaux reçus à une fréquence différente.

10. Système selon la revendication 9, dans lequel la station de base éclaire les relais à des fréquences de distribution qui se trouvent en dehors d'une bande de fonctionnement d'un terminal d'abonné, le dispositif de transformation assurant la transformation des signaux reçus à une fréquence qui se trouve dans une bande de fonctionnement d'un terminal d'abonné.

11. Système selon l'une quelconque des revendications précédentes, dans lequel la station de base comporte aussi un dispositif destiné à communiquer directement avec les abonnés aux fréquences des abonnés.

12. Station de base destinée à être utilisée dans un système de communications cellulaires selon l'une quelconque des revendications précédentes, la station de base possédant un ensemble d'antennes capable de former des faisceaux directionnels pour desservir plusieurs relais disposés dans la portée de la station de base, et dans lequel, pendant l'utilisation, la station de base peut faire varier la largeur de ses faisceaux directionnels afin d'éclairer sélectivement les relais.

13. Procédé de mise en oeuvre d'un système de communications cellulaires, comprenant une station de base ayant un ensemble d'antennes et plusieurs relais disposés dans la portée de la station de base,
le procédé comprenant :
la formation de faisceaux directionnels par l'ensemble d'antennes, et
la réception de signaux de la station de base, à chacun des relais, et l'émission des signaux reçus vers des abonnés dans une zone respective de service des relais,
dans lequel la station de base, pendant l'utilisation, fait varier la largeur des faisceaux directionnels et éclaire ainsi sélectivement les relais.
